# EUROPÄISCHE PATENTSCHRIFT

(11) **EP 1 518 100 B1**
(45) Veröffentlichungstag und Bekanntmachung des Hinweises auf die Patenterteilung: **11.02.2009**
(21) Anmeldenummer: 03760552.4
(22) Anmeldetag: 04.06.2003
(51) Int. Cl.: B60B 3/00, F16F 15/32, G01M 1/32, G01M 1/34

(54) **VERFAHREN UND VORRICHTUNG ZUR HERSTELLUNG EINER FELGE, SOWIE VERFAHREN ZUR MONTAGE EINES RADES**
METHOD AND DEVICE FOR PRODUCING A RIM, AND METHOD FOR MOUNTING A WHEEL
PROCEDE ET DISPOSITIF DE PRODUCTION D'UNE JANTE ET PROCEDE DE MONTAGE D'UNE ROUE

(30) Priorität: 24.06.2002 DE 10228164
(43) Veröffentlichungstag der Anmeldung: 30.03.2005
(73) Patentinhaber: Vanetta, Aldo, 85055 Ingolstadt (DE)
(72) Erfinder: Vanetta, Aldo, 85055 Ingolstadt (DE)
(74) Vertreter: Staudt, Hans-Peter
(86) Internationale Anmeldenummer: PCT/DE2003/001828
(87) Internationale Veröffentlichungsnummer: WO 2004/001363

(56) Entgegenhaltungen:
- EP-A- 0 222 391
- GB-A- 2 270 887
- US-A- 5 271 663
- PATENT ABSTRACTS OF JAPAN vol. 1999, no. 14, 22. Dezember 1999 (1999-12-22) & JP 11 257434 A (BRIDGESTONE CORP), 21. September 1999 (1999-09-21)

## Beschreibung

Die Erfindung betrifft ein Verfahren und eine Vorrichtung zur Herstellung einer Felge sowie ein hierauf basierendes Verfahren zur Montage eines Rades.

Bei luftbereiften Kraftfahrzeugen ist die Unwucht der Kombination aus Felge und Reifen, d.h. die Unwucht des fahrfertigen Rades möglichst gering zu halten. Während bei der Herstellung von Felgen aufgrund der mechanischen Bearbeitung der Felge ein relativ guter Wuchtgrad erreichbar ist, stellt die Bereitstellung von Reifen mit einer sehr geringen Unwucht, insbesondere für die Serienproduktion, ein erhebliches Problem dar.

In der US 5,271,663 A wird dieses Problem angesprochen und daraus hingewiesen, dass Räder üblicherweise erst dann ausgewuchtet werden, nachdem der Reifen auf die Felge aufgezogen wurde. Hierbei wird die Unwucht des fertig montierten Rades festgestellt und es werden Ausgleichgewichte an den äußeren Rändern der Felge angebracht, um einen Wuchtausgleich bereitzustellen. Zur Reduzierung der erforderlichen Menge an Ausgleichgewichten oder um diesen nachträglichen Wuchtvorgang vollständig überflüssig zu machen wird in dieser Druckschrift vorgeschlagen, Felgen mit einem vorgewählten Grad an Unwucht herzustellen, wobei der Unwuchtgrad der Größe eines durchschnittlichen Unwuchtgrades von Reifen entspricht. Die Felgen werden zudem markiert, um die Stelle ihres größten oder niedrigsten Gewichtes anzugeben. Entsprechend werden Reifen mit einer Markierung hinsichtlich der Lage ihrer Unwucht bereitgestellt. Bei der Montage des Reifens auf der Felge wird der Lage der jeweiligen Unwucht Rechnung getragen und die Montage erfolgt so, dass für die Kombination aus Felge und Reifen, d.h. für das gebrauchsfertige Rad eine möglichst geringe Gesamtunwucht anfällt. Die Einzelunwuchten stehen sich somit gegenüber und die verbleibende Unwucht des fahrfertigen Rades ergibt sich als Differenz und nicht etwa als Summe der Einzelunwuchten. Sie ist somit kleiner und kann durch eine geringere Menge an Ausgleichgewichten ausgewuchtet werden. Dieses Vorgehen wird "Matchen" genannt.

Das Matchen ist jedoch bei einer Massenproduktion nicht praktikabel und daher in der Massenfertigung der Automobilindustrie nie zum Einsatz gekommen. Der praktischen Anwendung steht insbesondere entgegen, dass es in der Massenproduktion zu aufwendig wäre, Reifen und Felgen mit identischen oder nahezu identischen Unwuchtgraden vorrätig zu halten, dann auszuwählen und in entsprechender Anordnung zu montieren. Hierauf weist die WO 92/01918 A1 hin und schlägt vor, jeden Reifen und jede Felge einer Messung zu unterziehen, um den Wert eines Parameters zu bestimmen, der eine Tendenz des Reifens zum Verursachen von Vibrationen angibt, Reifen und Felge eine Rangbezeichnung zuzuordnen, wobei der Rang von der Größe des Parameters abhängt, so dass jede Felge und jeder Reifen in eine bestimmte Gruppe fällt, und Felge und Reifen, die korrespondierenden Gruppen entsprechen, in einer solchen Zuordnung zueinander zu kombinieren, dass die Einzelunwuchten von Reifen und Felge die Tendenz aufweisen, einander aufzuheben.

Auch dieses Verfahren weist den Nachteil auf, dass es sehr aufwendig ist. Ein Einsatz in der Massenfertigung erscheint daher ebenso inpraktikabel wie ein Einsatz bei kleineren Reifenhändlern, die, nachdem der durch die Erstausrüstung bereitgestellte Reifen verschlissen ist, eine Neubereifung vornehmen.

Aus der DE 29 28 561 A1 ist eine Felge bekannt, welche eine konzentrisch zur Nabe umlaufende Nut aufweist, in der festklemmbare Ausgleichgewichte eingesetzt sind. In dieser Druckschrift werden jedoch weder der Aspekt des Matchens noch der Grad der Unwucht der Felge ohne die Ausgleichgewichte angesprochen.

Der Erfindung liegt die Aufgabe zugrunde, eine Lösung des oben erläuterten technischen Problems im Zusammenhang mit der Auswuchtung eines gebrauchsfertig montierten Rades bereitzustellen, die auch in der Massenproduktion praktikabel ist.

Die Lösung dieses Problems ist in den Patentansprüchen angegeben.

Das dieser Lösung zugrundeliegende erfinderischen Konzept trägt dem Umstand Rechnung, dass bei der Produktion von Reifen ein Messen des Unwuchtgrades zur Qualitätskontrolle ohnehin erforderlich ist, so dass das Anbringen einer Markierung, die die Lage und den Grad der Unwucht zeigt, keinen unvertretbar hohen Aufwand bedeutet, während ein Beseitigen der Unwucht im Falle des Reifens, insbesondere bei einer Massenproduktion, nicht praktikabel ist. Das erfinderische Konzept trägt zudem dem Umstand Rechnung, dass bei der Herstellung einer Felge nicht nur eine Messung des Unwuchtgrades, sondern auch die Beseitigung einer Unwucht vergleichsweise einfach ist, da ohnehin mechanische Bearbeitungen vorgenommen werden. Diesen Umständen Rechnung tragend besteht das erfinderische Konzept darin, die Beseitigung einer Unwucht bzw. die Bereitstellung eines vorbestimmten Sollwerts einer Unwucht der Felge, welcher vorzugsweise bei Null liegt, nicht durch ein beliebiges Abtragen von Material vorzunehmen, sondern in einer Art und Weise, die es ermöglicht, einen späteren Ausgleich der durch die Kombination dieser Felge mit einem Reifen entstehende Gesamtunwucht möglichst einfach auszugleichen.

Das erfindungsgemäße Verfahren zur Herstellung einer Felge umfasst daher zunächst das Bereitstellen einer Felge mit einem Wuchtbearbeitungsbereich. Dieser Wuchtbearbeitungsbereich ist ein bei der Konstruktion der Felge vorbestimmter Bereich, in dem die nachfolgend erläuterten Bearbeitungen vorgenommen werden können, ohne dass Beeinträchtigungen bezüglich sonstiger Funktionen der Felge, insbesondere Beeinträchtigung hinsichtlich ihrer Festigkeit und Dichtigkeit, auftreten. Die nächsten Verfahrensschritte des erfindungsgemäßen Verfahrens zur Herstellung einer Felge betreffen das Aufbringen der Felge auf eine Wuchtvorrichtung und das Ermitteln einer Unwucht der Felge der Lage und dem Betrage nach. In Abhängigkeit von der Lage und dem Betrag der Unwucht wird nunmehr erfindungsgemäß die Bearbeitung des Wuchtbearbeitungsbereichs festgelegt. Hierbei wird Material entfernt, jedoch nicht in beliebiger Weise, sondern zur Erzeugung mindestens einer Vertiefung mit vorbestimmter Form. Die Lage, Anzahl und Abmessungen der Vertiefung werden hierbei so gewählt, dass die Unwucht der Felge nach der Erzeugung der mindestens einen Vertiefung innerhalb eines vorbestimmten Toleranzbereichs um einen vorbestimmten Sollwert liegt, welcher vorzugsweise Null ist. Mit anderen Worten, es wird eine vollständige Auswuchtung der Felge durch mechanische Bearbeitung erzielt, wobei jedoch nicht beliebig Material entfernt wird, sondern wobei mindestens eine Vertiefung mit vorbestimmter Form erzeugt wird. Die Form der Vertiefung ist so ausgewählt, dass die Vertiefung in einem späteren Verfahren zur Montage eines hinsichtlich seiner Unwucht bezüglich Lage und Größe klassifizierten Reifens auf der Felge ein der Form der Vertiefung entsprechendes Ausgleichgewicht zum Ausgleich der Unwucht des fertig montierten Rades aufnehmen kann.

Gemäß dem Erfindungsgedanken der vorliegenden Anmeldung werden somit Felgen bereitgestellt, die einen vorbestimmten Wuchtgrad aufweisen, der vorzugsweise Null sein kann, jedoch gegebenenfalls auch eine vorbestimmte Unwucht aufweisen kann, um eine üblicherweise bei der Reifenproduktion auftretende Unwucht des Reifens zumindest teilweise zu kompensieren. Diese Felgen weisen neben dem vorbestimmten Wuchtgrad Vertiefungen einer vorbestimmten Form auf, die dazu ausgelegt sind, Ausgleichgewichte einer entsprechenden Form aufzunehmen. Die Bereitstellung von entsprechenden Ausgleichgewichten unterschiedlichen Gewichts in ausreichender Zahl ist unproblematisch und stellt insbesondere keine erhöhten Lageranforderungen. Sie entspricht vielmehr dem derzeit Üblichen hinsichtlich der Lagerung von Bleigewichten, die der allgemeinen Praxis zufolge bei der Auswuchtung des gebrauchsfertigen Rades auf den Felgenrand aufgesteckt oder an der Felge angeklebt werden.

Bei der späteren Montage eines Reifens auf der Felge muss somit lediglich die Unwucht des zu montierenden Reifens hinsichtlich Lage und Größe festgestellt werden, ein Ausgleichgewicht mit der vorbestimmten Form ausgewählt werden, das zum Ausgleich der Unwucht der Rad-/Reifenkombination geeignet ist, das Ausgleichgewicht in der Vertiefung der Felge angebracht und der Reifen in einer solchen Position auf der Felge montiert werden, dass sich nach der Montage des Reifens auf der Felge eine Unwucht des fertig montierten Rades unterhalb eines vorbestimmten Grenzwertes ergibt.

Es versteht sich, dass diese Montage unter Berücksichtigung von weiteren Einflussfaktoren wie beispielsweise dem Gewicht des Ventils oder dem Gewicht von Reifendrucksensoren erfolgt.

Die Erfindung bietet somit die Möglichkeit des Matchens unter Verwendung einer kostengünstig herstellbaren Einheitsfelge, d.h. ohne den Nachteil, verschiedene Felgen mit unterschiedlichen Auswuchtgraden bereitzustellen, um unterschiedliche Reifenunwuchten zu kompensieren. Der Ausgleich erfolgt über Gewichte, deren Vorratshaltung unproblematisch ist. Die zur Anbringung der Gewichte erforderlichen Vertiefungen entsprechender Form werden bereits bei der Produktion der Felge und gemeinsam mit dem ohnehin erforderlichen Wuchtvorgang angebracht, sodass die Herstellung der Felge kostengünstig erfolgen kann.

Die Vertiefungen werden an bei der Konstruktion der Felge bereits vorbestimmten Stellen angebracht, insbesondere auch an der Innenseite des Felgenbetts, sodass das Aussehen der Felgen weder durch die Vertiefungen noch durch die darin anzubringenden Gewichte beeinträchtigt wird. Aus diesem Grunde ist auch das Anbringen mehrerer Gewichte aus optischen Gründen unproblematisch, sodass auf Schwermetalle wie Blei verzichtet werden kann, was unter dem Gesichtspunkt der Umweltverträglichkeit bedeutsam ist.

Wie bereits erläutert, kann der vorbestimmte Sollwert in einer bevorzugten Ausführungsform der Erfindung Null sein. Hierdurch steht immer eine unwuchtfreie Felge zur Verfügung und das bei der Montage des Reifens einzufügende Wuchtgewicht kann exakt dem Unwuchtgrad des Reifens angepasst sein. Es versteht sich hierbei, dass der Fachmann den Einfluss unterschiedlicher Ausgleichsebenen sowie den Radius der Stelle, an der Ausgleichgewichte angebracht werden, mit in Betracht zieht. Die Ermittlung des für einen Wuchtausgleich erforderlichen Ausgleichsgewichts bei einer gegebenen Unwucht des Reifens und hinsichtlich der Lage der Vertiefungen bei vorgegebenen geometrischen Randbedingungen der Felge liegt im Bereich fachmännischen Könnens.

Alternativ besteht die Möglichkeit, einen von Null verschiedenen Sollwert für die vorbestimmte Unwucht der Felge vorzusehen, um durchschnittlichen Unwuchten eines Reifens Rechnung zu tragen und bei der späteren Montage des Reifens auf der Felge gegebenenfalls kleinere oder weniger Ausgleichgewichte verwenden zu können.

Der vorbestimmte Toleranzbereich um den vorgegebenen Sollwert, in dem die Unwucht der Felge nach der Anbringung der Vertiefungen liegen kann, sollte grundsätzlich so klein wie möglich sein, beispielsweise ≤ +/- 10 Gramm, vorzugsweise ≤ +/- 5 Gramm und höchstvorzugsweise ≤ +/- 2 Gramm. Es versteht sich für den Fachmann, dass beliebige andere Werte ausgewählt werden können, abhängig von der Genauigkeit der Messverfahren, der Genauigkeit anderer Parameter, beispielsweise der Toleranz von Angaben auf den zu klassifizierenden Reifen und abhängig davon, welche Restunwucht bei dem fertig montierten Rad als zulässig angesehen wird.

Bezüglich der Art der Vertiefung stehen dem Fachmann verschiedene Möglichkeiten zur Verfügung, beispielsweise eine Schwalbenschwanznut, eine Rechtecknut oder eine oder mehrere Bohrungen. Wie bereits erläutert, müssen die Vertiefungen eine vorbestimmte Form aufweisen, um die entsprechenden Ausgleichgewichte aufnehmen zu können. Wird daher, nachdem die Unwucht der Felge vor dem Anbringen der Vertiefung ermittelt wurde, festgestellt, dass nur eine sehr geringe Unwucht vorliegt, sodass das Anbringen einer Vertiefung in der vorgegebenen Form an der der leichtesten Stelle des Rades gegenüberliegenden Stelle so viel Material abtragen würde, dass eine Überkompensation der Unwucht entstehen würde, können an zwei gegenüberliegenden Stellen Vertiefungen angebracht werden, wobei eine dieser Vertiefungen in ihrer Abmessung etwas größer ausfällt, um die Kompensation der Unwucht zu bewirken. Beispielsweise können zwei gegenüberliegende Bohrungen angebracht werden, die zwar hinsichtlich des Durchmessers gleich sind, die jedoch eine unterschiedliche Tiefe aufweisen, wodurch ein vollständiger Wuchtausgleich der Felge bereitgestellt wird. Es besteht zudem die Möglichkeit, zwei gegenüberliegende Nuten anzubringen, wobei eine der beiden Nuten eine etwas größere Tiefe bei ansonsten gleicher Breite oder eine etwas größere Länge aufweist. Des weiteren besteht die Möglichkeit, mehrere Nuten anzubringen bzw. eine Längsnut mit Unterbrechungen bereitzustellen, sodass durch diese Unterbrechungen an der jeweiligen Stelle mehr Material verbleibt, um eine Unwucht auszugleichen. Schließlich besteht auch die Möglichkeit, an gegenüberliegenden Seiten einer Felge Bohrungen in unterschiedlicher Anzahl bereitzustellen.

Die Vertiefungen können mit einem Gewinde versehen sein. Dies ermöglicht es, das später anzubringende Ausgleichgewicht zu verschrauben.

Das Ermitteln der Unwucht der Felge der Lage und dem Betrage nach und das mechanische Bearbeiten der Felge in dem Wuchtbearbeitungsbereich zur Erzeugung der mindestens einen Vertiefung vorbestimmter Form erfolgt vorzugsweise auf einer integralen Auswucht-Bearbeitungs-Vorrichtung. In einer bevorzugten Ausführungsform der Erfindung beinhaltet dieses Verfahren die Verfahrensschritte des maschinenlesbaren Anbringens einer Kennzeichnung an der Felge, anhand derer die Lage des Wuchtbearbeitungsbereichs erkennbar ist und das Einlesen dieser maschinenlesbaren Kennzeichnung vor dem mechanischen Bearbeiten.

Eine erfindungsgemäße Vorrichtung zur Bearbeitung einer Felge weist demzufolge eine Wuchteinrichtung zum Ermitteln einer Unwucht einer Felge mit einem vorbestimmten Wuchtbearbeitungsbereich der Lage und dem Betrage nach, eine Einrichtung zum Auswählen und Berechnen einer Vertiefung mit vorbestimmter Form in dem vorbestimmten Wuchtbearbeitungsbereich der Felge, wobei Lage, Anzahl und Abmessungen der Vertiefung so gewählt sind, dass die Unwucht der Felge nach der Erzeugung der mindestens einen Vertiefung innerhalb eines vorbestimmten Toleranzbereichs um einen vorbestimmten Sollwert, der vorzugsweise Null ist, liegt und wobei die Form der Vertiefung so ausgewählt ist, dass die Vertiefung mit einem späteren Verfahren zur Montage eines hinsichtlich seiner Unwucht bezüglich Lage und Größe klassifizierten Reifens auf der Felge ein der Form der Vertiefung entsprechendes Ausgleichgewicht zum Ausgleich der Unwucht und des fertig montierten Rades aufnehmen kann, und eine Einrichtung zum Anbringen der ausgewählten und berechneten Vertiefung auf.

Vorzugsweise verfügt die erfindungsgemäße Vorrichtung zudem über eine Einrichtung, die dazu ausgelegt ist, eine an der Felge angebrachte maschinenlesbare Kennzeichnung, anhand derer die Lage des Wuchtbearbeitungsbereichs erkennbar ist, zu erfassen. Auf einer derartigen Vorrichtung können somit Felgen unterschiedlicher Bauart in einfacher Weise gewuchtet und bearbeitet werden. Nachdem eine Unwucht der Felge ermittelt ist, wird anhand der maschinenlesbaren Kennzeichnung ermittelt, an welcher Stelle der Wuchtbearbeitungsbereich liegt und wie dieser beschaffen ist. Aus den nunmehr vorliegenden Informationen, d.h. aus der Größe der Unwucht sowie aus der Lage und der Beschaffenheit des Wuchtbearbeitungsbereichs kann die erfindungsgemäße Vorrichtung, vorzugsweise rechnergestützt, ermitteln, welche Vertiefung vorbestimmter Form anzubringen ist und in welcher Anzahl bzw. an welcher Position diese Vertiefungen anzubringen sind.

Das erfindungsgemäße Konzept ermöglicht somit ein Verfahren zur Montage eines Rades, bei dem eine Felge bereitgestellt wird, deren Unwucht innerhalb eines vorbestimmten Toleranzbereichs um einen vorbestimmten Sollwert liegt, wobei die Felge eine Vertiefung in vorbestimmter Form aufweist, bei dem des weiteren ein Reifen mit einer bestimmten Reifenunwucht, welcher eine Reifenmarkierung aufweist, anhand derer die Lage und Größe der Reifenunwucht erkennbar ist, bereitgestellt wird, bei dem ein der vorbestimmten Form der Vertiefung entsprechendes Ausgleichgewicht zum Ausgleich der Unwucht der Felge-/Reifenkombination ausgewählt wird, und bei dem dieses Ausgleichgewicht in der Vertiefung montiert und der Reifen auf der Felge in jeweils einer solchen Position zu der Felge montiert wird, dass sich nach der Montage des Reifens auf der Felge eine Unwucht des fertig montierten Rades unterhalt eines vorbestimmten Grenzwertes ergibt.

Für die Befestigung des Ausgleichgewichts in der Vertiefung stehen dem Fachmann eine Vielzahl von Möglichkeiten zur Verfügung, die, je nach Form, Lage und Art der Vertiefung alternativ oder kumulativ gewählt werden können. Diese Möglichkeiten beinhalten unter anderem ein Einkleben des Ausgleichgewichts in der Vertiefung, ein Befestigen des Ausgleichgewichts in der Vertiefung mittels einer Klammer und das Verschrauben des Ausgleichgewichts in der Vertiefung mittels einer Schraubverbindung, wobei dann, wenn die Vertiefung mit einer Gewindebohrung versehen ist, das Ausgleichgewicht in die Gewindebohrung eingeschraubt werden kann. Hinsichtlich der kumulativen Wahl dieser Befestigungsmethoden sei beispielsweise darauf hingewiesen, dass beim Einschrauben des Ausgleichgewichts in die Gewindebohrung als Sicherung der Verschraubung das Aufbringen von Kleber auf die Gewindegänge und die Verwendung eines Federrings unter dem Schraubenkopf möglich ist.

Die Erfindung wird im folgenden anhand bevorzugter Ausführungsbeispiele weiter erläutert in Verbindung mit der Zeichnung, in der
Fig. 1 schematisch die obere Hälfte einer Felge in einer Schnittdarstellung zeigt,
Fig. 2 schematisch die Seitenansicht einer Felge zeigt,
Fig. 3 eine schematische Schnittdarstellung einer ersten Ausführungsform einer Vertiefung und eines entsprechenden Ausgleichgewichts ist,
Fig. 4 schematisch eine Schnittdarstellung einer zweiten Ausführungsform einer Vertiefung und eines entsprechenden Ausgleichgewichts zeigt,
Fig. 5 schematisch eine Schnittdarstellung einer dritten Ausführungsform einer Vertiefung und eines entsprechenden Ausgleichgewichts zeigt und
Fig. 6 schematisch eine Schnittdarstellung einer vierten Ausführungsform einer Vertiefung und eines entsprechenden Ausgleichgewichts zeigt.

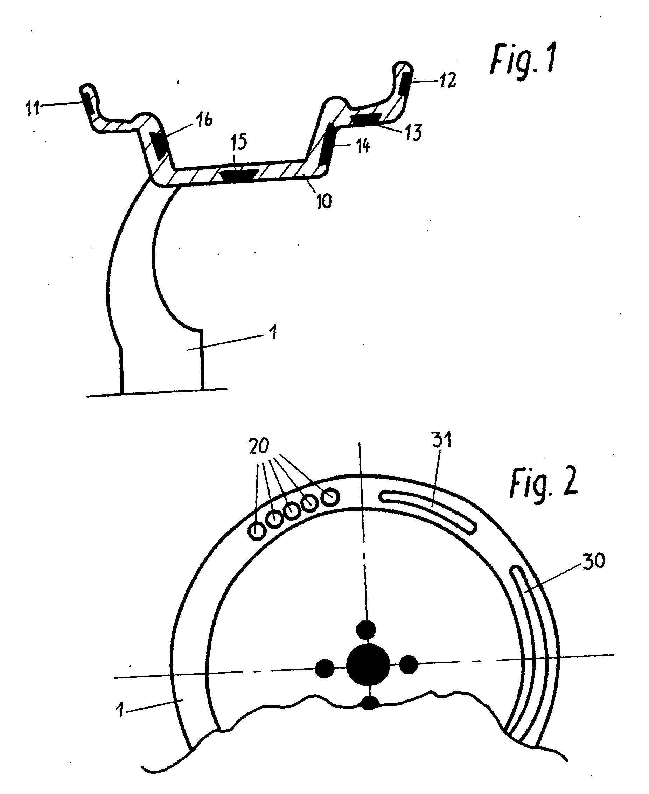

Fig. 1 zeigt einen Schnitt durch das Felgenbett 10 einer Felge 1. Da es sich hierbei um rotationssymmetrische Körper handelt, ist lediglich eine Hälfte der Felge 1 dargestellt.

An dem Felgenbett 10 sind Wuchtbearbeitungsbereiche 11, 12, 13, 14, 15 und 16 dargestellt, wobei die aussen am Felgenhorn angeordneten Wuchtbearbeitungsbereiche 11 und 12 als Rechtecknut und die Wuchtbearbeitungsbereiche 13, 14, 15 und 16 als Schwalbenschwanznut ausgeführt sind. Es versteht sich, dass eine die Anforderungen der Felge beachtende, innerhalb dieser Anforderungen jedoch nahezu beliebige andere Aufteilung und Anordnung von Wuchtbearbeitungsbereichen möglich ist. So können beispielsweise mehr Wuchtbearbeitungsbereiche auf der Innenseite des Felgenbetts angeordnet sein oder andere Formen der Vertiefungen an anderen Stellen vorgesehen sein. Es versteht sich zudem, dass die Anzahl der möglichen Wuchtbearbeitungsbereiche freigestellt ist.

Grundsätzlich besteht die Möglichkeit, lediglich einen Wuchtbearbeitungsbereich vorzusehen. Vorzugsweise werden jedoch zwei und gegebenenfalls mehr Wuchtbearbeitungsbereiche vorgegeben, um eine Auswuchtung in mehreren Ebenen bereitstellen zu können.

Fig. 2 zeigt in einer Seitenansicht zwei verschiedene Arten von Vertiefungen, nämlich eine Reihe von nebeneinander liegenden Bohrungen 20 und zwei Nuten 30, 31, die, je nach Sichtweise, auch als eine unterbrochene Nut angesehen werden können. Es versteht sich, dass an der jeweils gegenüberliegenden Seite dieser Vertiefungen ebenfalls eine Bearbeitung der Felge erfolgen kann, die eine oder mehrere jeweils entsprechende Vertiefungen mit im wesentlichen gleicher Form oder auch andere Vertiefungen sein können. Hierdurch wird ermöglicht, eine Vertiefung bestimmter vorgegebener Form bereitstellen zu können, die eine Aufnahme eines entsprechenden Ausgleichgewichts ermöglicht, und gleichzeitig einen vorbestimmten Wuchtgrad zu erreichen, beispielsweise einen vollständigen Wuchtausgleich der Felge. Weist beispielsweise die Felge vor dem Anbringen der Vertiefungen einen Wuchtgrad auf, der bereits durch Entfernen einer sehr geringen Materialmenge einen vollständigen Wuchtausgleich erlauben würde, sodass durch das Entfernen dieser geringen Materialmenge keine Vertiefung bereitgestellt würde, die die Aufnahme eines entsprechenden Ausgleichgewichts ermöglicht, so können an zwei gegenüberliegenden Stellen Vertiefungen unterschiedlicher Anzahl bzw. unterschiedlicher Länge oder Tiefe gewählt werden, sodass durch diese Unterschiede der Wuchtausgleich herbeigeführt wird.

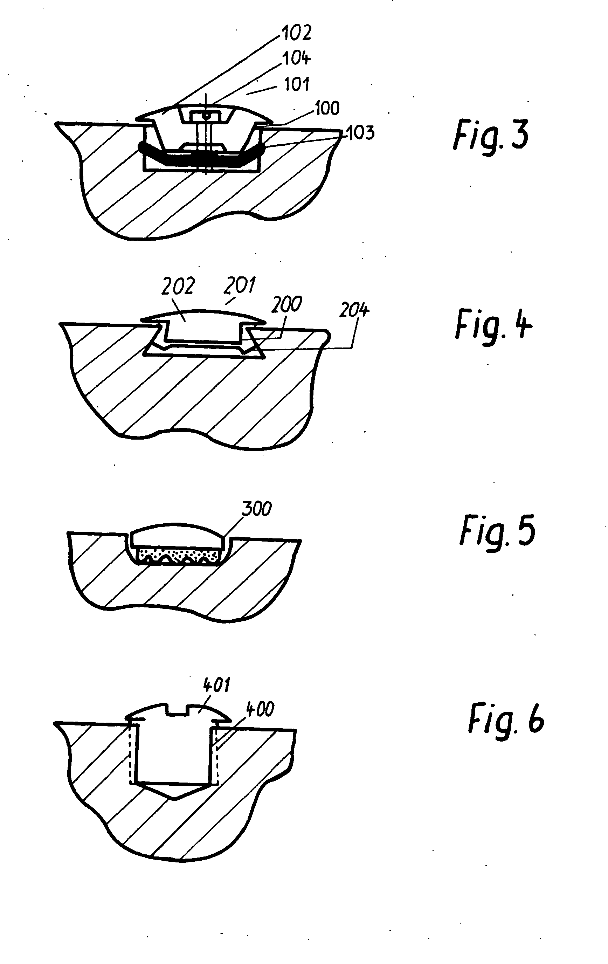

Fig. 3 zeigt eine erste Ausführungsform einer Vertiefung und eines entsprechenden Ausgleichgewichts in einer Schnittdarstellung. Die Vertiefung besteht aus einer Rechtecknut 100 und einer Schraubklemme 101. Die Schraubklemme 101 weist einen Grundkörper 102 und eine Spannfeder 103 auf, wobei Letztere mittels einer Schraube 104 so gespannt werden kann, dass die Schraubklemme 101 in der Nut 100 fest fixiert wird.

Fig. 4 zeigt eine zweite Ausführungsform einer Vertiefung und eines entsprechenden Ausgleichgewichts. Diese zweite Ausführungsform der Vertiefung ist eine Schwalbenschwanznut 200 und das entsprechende Ausgleichgewicht 201 weist einen Grundkörper 202 und eine Feder 204 auf. Dieses selbstklemmende Ausgleichgewicht 201 kann in die Schwalbenschwanznut 200 eingedrückt werden und schnappt über die Feder 204 rastend in diese ein.

Fig. 5 zeigt eine dritte Ausführungsform einer Vertiefung und eines entsprechenden Ausgleichgewichts. Die Vertiefung 300 weist gegenüber der Rechtecknut 100 etwas stärker abgerundete Kanten am Boden der Nut auf und das entsprechende Ausgleichgewicht 301 ist in die Nut 300 eingeklebt. Geeignete Kleber hierfür stehen dem Fachmann zur Verfügung.

Fig. 6 zeigt eine vierte Ausführungsform einer Vertiefung und eines entsprechenden Ausgleichgewichts. Die Vertiefung gemäß dieser vierten Ausführungsform ist als Gewindebohrung 400 ausgeführt, in die ein Ausgleichgewicht 401 mit entsprechendem Aussengewinde eingeschraubt ist.

Es versteht sich, dass dem Fachmann eine Kombination unterschiedlicher Vertiefungen und entsprechender Ausgleichgewichte, sowohl der Art als auch der Anzahl und Abmessungen nach, zur Verfügung stehen, um das erfindungsgemäße Konzept zu verwirklichen.

## Patentansprüche

1. Verfahren zur Herstellung einer Felge mit den folgenden Verfahrensschritten:
a) Bereitstellen einer Felge mit einem Wuchtbearbeitungsbereich,
b) Aufbringen der Felge auf eine Wuchtvorrichtung;
c) Ermitteln einer Unwucht der Felge der Lage und dem Betrag nach;
d) Mechanisches Bearbeiten der Felge in dem Wuchtbearbeitungsbereich zur Erzeugung mindestens einer Vertiefung mit vorbestimmter Form,
d1) wobei Lage, Anzahl und Abmessungen der Vertiefung so gewählt sind, dass die Unwucht der Felge nach der Erzeugung der mindestens einen Vertiefung innerhalb eines vorbestimmten Toleranzbereichs um einen vorbestimmten Sollwert liegt;
d2) wobei die Form der Vertiefung so ausgewählt ist, dass die Vertiefung in einem späteren Verfahren zur Montage eines hinsichtlich seiner Unwucht bezüglich Lage und Größe klassifizierten Reifens auf der Felge ein der Form der Vertiefung entsprechendes Ausgleichgewicht zum Ausgleich der Unwucht des fertig montierten Rades aufnehmen kann.

2. Verfahren nach Anspruch 1, **dadurch gekennzeichnet, dass** der vorbestimmte Sollwert Null ist.

3. Verfahren nach Anspruch 1 oder 2, **dadurch gekennzeichnet, dass** der vorbestimmte Toleranzbereich um den Sollwert ≤ ± 10 g, vorzugsweise ≤ ± 5 g und höchstvorzugsweise ≤ ± 2 g ist.

4. Verfahren nach einem der Ansprüche 1 bis 3, **dadurch gekennzeichnet, dass** die Vertiefung als Schwalbenschwanznut ausgeführt wird.

5. Verfahren nach einem der Ansprüche 1 bis 3, **dadurch gekennzeichnet, dass** die Vertiefung als Rechtecknut ausgeführt wird.

6. Verfahren nach einem der Ansprüche 1 bis 3, **dadurch gekennzeichnet, dass** die Vertiefung als Bohrung ausgeführt wird.

7. Verfahren nach Anspruch 6, **dadurch gekennzeichnet, dass** mehrere Bohrungen nebeneinander in dem Wuchtbearbeitungsbereich ausgeführt werden.

8. Verfahren nach einem der vorstehenden Ansprüche, **dadurch gekennzeichnet, dass** in der Vertiefung ein Gewinde angebracht wird.

9. Verfahren nach einem der vorstehenden Ansprüche, **dadurch gekennzeichnet, dass** die Verfahrensschritte b) und c) auf einer intergralen Auswucht-Bearbeitungs-Vorrichtung durchgeführt werden.

10. Verfahren nach einem der vorstehenden Ansprüche, **dadurch gekennzeichnet, dass** an der Felge eine maschinenlesbare Kennzeichnung angebracht wird, anhand derer die Lage des Wuchtbearbeitungsbereichs erkennbar ist, und dass die maschinenlesbare Kennzeichnung vor dem Verfahrensschritt d) eingelesen wird.

11. Vorrichtung zur Bearbeitung einer Felge, die in einem Verfahren laut Anspruch 1 hersgestellt wurde, mit
einer Wuchteinrichtung zum Ermitteln einer Unwucht einer Felge mit einem vorbestimmten Wuchtbearbeitungsbereich der Lage und dem Betrag nach,
einer Einrichtung zum Auswählen und Berechnen einer Vertiefung mit vorbestimmter Form in dem vorbestimmten Wuchtbearbeitungsbereich der Felge, wobei Lage, Anzahl und Abmessungen der Vertiefung so gewählt sind, dass die Unwucht der Felge nach der Erzeugung der mindestens einen Vertiefung innerhalb eines vorbestimmten Toleranzbereichs um einen vorbestimmten Sollwert liegt und wobei die Form der Vertiefung so ausgewählt ist, dass die Vertiefung in einem späteren Verfahren zur Montage eines hinsichtlich seiner Unwucht bezüglich Lage und Größe klassifizierten Reifens auf der Felge ein der Form der Vertiefung entsprechendes Ausgleichgewicht zum Ausgleich der Unwucht des fertig montierten Rades aufnehmen kann; und
einer Einrichtung zum Anbringen der ausgewählten und berechneten Vertiefung

12. Vorrichtung nach Anspruch 11, **dadurch gekennzeichnet, dass** der vorbestimmte Sollwert Null ist.

13. Vorrichtung nach Anspruch 11 oder 12, **dadurch gekennzeichnet, dass** der vorbestimmte Toleranzbereich um den Sollwert ≤ ± 10 g, vorzugsweise ≤ ± 5 g und höchstvorzugsweise ≤ ± 2 g ist.

14. Vorrichtung nach einem der Ansprüche 11 bis 13, **dadurch gekennzeichnet, dass** die Vertiefung eine Schwalbenschwanznut ist.

15. Vorrichtung nach einem der Ansprüche 11 bis 13, **dadurch gekennzeichnet, dass** die Vertiefung eine Rechtecknut ist.

16. Vorrichtung nach einem der Ansprüche 11 bis 13, **dadurch gekennzeichnet, dass** die Vertiefung eine Bohrung ist.

17. Vorrichtung nach einem der Ansprüche 11 bis 13, **dadurch gekennzeichnet, dass** die Vertiefung eine Vielzahl von Bohrungen umfasst.

18. Vorrichtung nach einem der Ansprüche 11 bis 17, **gekennzeichnet durch** eine Einrichtung, die dazu ausgelegt ist, eine an der Felge angebrachte maschinenlesbare Kennzeichnung, anhand derer die Lage des Wuchtbearbeitungsbereichs erkennbar ist, zu erfassen.

19. Verfahren zur Montage eines Rades mit den folgenden Verfahrensschritten:
a) Bereitstellen einer Felge, deren Unwucht innerhalb eines vorbestimmten Toleranzbereichs um einen vorbestimmten Sollwert liegt, wobei die Felge eine Vertiefung mit vorbestimmter Form aufweist und in einen Verfahren nach Anspruch 1 hergestellt wurde;
b) Bereitstellen eines Reifens mit einer bestimmten Reifenunwucht, welcher eine Reifenmarkierung aufweist, an Hand derer die Lage und Größe der Reifenunwucht erkennbar ist;
c) Auswählen eines der vorbestimmten Form der Vertiefung entsprechenden Ausgleichgewichts zum Ausgleich der Unwucht der Rad/Reifen Kombination;
d) Anbringen des ausgewählten Ausgleichgwichts in der Vertiefung und Montieren des Reifens auf der Felge in jweils einer solchen Position zu der Felge, dass sich nach der Montage des Reifens auf der Felge eine Unwucht des fertig montierten Rades unterhalb eines vorbestimmten Grenzwertes ergibt.

20. Verfahren nach Anspruch 19, **dadurch gekennzeichnet, dass** das Ausgleichgewicht in der Vertiefung eingeklebt wird.

21. Verfahren nach Anspruch 19 oder 20, **dadurch gekennzeichnet, dass** das Ausgleichgewicht in der Vertiefung mittels einer Klammer befestigt wird.

22. Verfahren nach Anspruch 19, 20 oder 21, **dadurch gekennzeichnet, dass** das Ausgleichgewicht in der Vertiefung mittels einer Schraubverbindung befestigt wird.

23. Verfahren nach Anspruch 19, 20, 21 oder 22, wobei die Vertiefung mit einer Gewindebohrung versehen ist, **dadurch gekennzeichnet, dass** das Ausgleichgewicht in die Gewindebohrung eingeschraubt wird.

## Claims

1. Method of manufacturing a rim, including the following procedure steps:
a) provision of a rim including a balancing processing area,
b) mounting of the rim onto a balancing device,
c) determination of an unbalance of the rim based on the position and amount;
d) mechanical processing of the rim in the balancing processing area to generate at least one cavity of a predetermined shape,
d1) wherein the position, number and dimensions of the cavity are selected such that the unbalance of the rim is, after the generation of the at least one cavity, within a predetermined tolerance range around a predetermined set value;
d2) wherein the shape of the cavity is selected such that the cavity can accommodate, in a later method of assembling a wheel classified according to its unbalance with respect to its position and size on the rim, a wheel balance weight corresponding to the shape of the cavity for balancing the unbalance of the readily assembled wheel.

2. Method according to claim 1, **characterised in that** the predetermined set value is zero.

3. Method according to claim 1 or 2, **characterised in that** the predetermined tolerance range around the set value is = ± 10 g, preferably = ± 5 g, and most preferred = ± 2 g.

4. Method according to one of claims 1 to 3, **characterised in that** the cavity is designed as a dovetail groove.

5. Method according to one of claims 1 to 3, **characterised in that** the cavity is designed as a square groove.

6. Method according to one of claims 1 to 3, **characterised in that** the cavity is designed as a drilled hole.

7. Method according to claim 6, **characterised in that** several drilled holes are provided side by side in the balancing processing area.

8. Method according to one of the preceding claims, **characterised in that** a thread is provided in the cavity.

9. Method according to one of the preceding claims, **characterised in that** procedure steps b) and c) are performed on an integral balancing processing device.

10. Method according to one of the preceding claims, **characterised in that** a machine readable characterisation is provided at the rim on the basis of which the position of the balancing processing area can be identified, and that the machine readable characterisation is read in before procedure step d).

11. Device of processing a rim manufactured in a method according to claim 1, including
balancing means to determine an unbalance of a rim with a predetermined balancing processing area according to the position and amount,
means for selecting and calculating a cavity of a predetermined shape in the predetermined balancing processing area of the rim, the position, number and dimensions of the cavity being selected such that the unbalance of the rim after the generation of the at least one cavity is within a predetermined tolerance range around a predetermined set value, and wherein the shape of the cavity is selected such that the cavity can accommodate, in a later method of assembling a wheel classified according to its unbalance with respect to its position and size on the rim, a wheel balance weight corresponding to the shape of the cavity for balancing the unbalance of the readily assembled wheel; and
means for providing the selected and calculated cavity.

12. Device according to claim 11, **characterised in that** the predetermined set value is zero.

13. Device according to claim 11 or 12, **characterised in that** the predetermined tolerance range around the set value is = ± 10 g, preferably = ± 5 g, and most preferred = ± 2 g.

14. Device according to one of claims 11 to 13, **characterised in that** the cavity is a dovetail groove.

15. Device according to one of claims 11 to 13, **characterised in that** the cavity is a square groove.

16. Device according to one of claims 11 to 13, **characterised in that** the cavity is a drilled hole.

17. Device according to one of claims 11 to 13, **characterised in that** the cavity comprises a plurality of drilled holes.

18. Device according to one of claims 11 to 17, **characterised by** means designed to detect a machine readable characterisation attached to the rim on the basis of which the position of the balancing processing area can be identified.

19. Method of assembling a wheel, including the following procedure steps:
a) provision of a rim of which the unbalance is within a predetermined tolerance range around a predetermined set value, the rim comprising a cavity of a predetermined shape and having been manufactured in a method according to claim 1;
b) provision of a tyre having a predetermined wheel unbalance and comprising a wheel marking on the basis of which the position and size of the wheel unbalance can be identified;
c) selection of a wheel balance weight corresponding to the predetermined shape of the cavity for balancing the unbalance of the wheel/tyre combination;
d) mounting of the selected wheel balance weight in the cavity and assembling the tyre on the rim, in each case in such a position to the rim that, after assembly of the tyre on the rim, an unbalance of the readily assembled wheel below a predetermined limiting value results.

20. Method according to claim 19, **characterised in that** the wheel balance weight is glued into the cavity.

21. Method according to claim 19 or 20, **characterised in that** the wheel balance weight is fixed in the cavity by means of a clamp.

22. Method according to claim 19, 20 or 21, **characterised in that** the wheel balance weight is fixed in the cavity by means of a threaded joint.

23. Method according to claim 19, 20, 21 or 22, wherein the cavity is provided with a tapped bore, **characterised in that** the wheel balance weight is screwed into the tapped bore.

## Revendications

1. Procédé de production d'une jante avec les étapes de procédé suivantes :
a) Mise à disposition d'une jante avec une zone d'usinage d'équilibrage ;
b) Placement de la jante sur un dispositif d'équilibrage;
c) Détermination d'un défaut d'équilibrage selon la position et la valeur ;
d) Usinage mécanique de la jante dans la zone d'usinage d'équilibrage destiné à créer au moins un renfoncement de forme prédéfinie,
d1) la position, le nombre et les dimensions de renfoncement étant choisis de telle sorte que le défaut d'équilibrage de la jante se situe, après la création d'au moins un renfoncement, dans une plage de tolérance prédéfinie aux alentours d'une valeur de consigne prédéfinie ;
d2) la forme du renfoncement étant sélectionnée de telle sorte que le renfoncement lors d'un processus ultérieur destiné au montage d'un pneumatique classé en termes d'importance et de position de son défaut d'équilibrage sur la jante puisse recevoir une masselotte correspondant à la forme du renfoncement pour compenser le défaut d'équilibrage de la roue à l'état monté.

2. Procédé selon la revendication 1, **caractérisé par le fait que** la valeur de consigne prédéfinie est zéro.

3. Procédé selon la revendication 1 ou 2, **caractérisé par le fait que** la plage de tolérance prédéfinie se situe aux alentours de la valeur de consigne = ± 10 g, préférentiellement = ± 5 g et plus préferentiellement = ± 2 g.

4. Procédé selon une des revendications 1 à 3, **caractérisé par le fait que** le renfoncement est réalisé sous forme de rainure en queue d'aronde.

5. Procédé selon l'une des revendications 1 à 3, **caractérisé par le fait que** le renfoncement est réalisé sous forme de rainure rectangulaire.

6. Procédé selon une des revendications 1 à 3, **caractérisé par le fait que** le renfoncement est réalisé sous forme d'alésage:

7. Procédé selon la revendication 6, **caractérisé par le fait que** plusieurs alésages sont effectués de manière juxtaposée dans la zone d'usinage d'équilibrage.

8. Procédé selon l'une quelconque des revendications précédentes, **caractérisé par le fait que** un taraudage est pratiqué dans le renfoncement.

9. Procédé selon l'une quelconque des revendications précédentes, **caractérisé par le fait que** les étapes de procédé b) et c) sont effectuées sur un dispositif d'usinage d'équilibrage intégral.

10. Procédé selon l'une quelconque des revendications précédentes, **caractérisé par le fait qu'**un repérage lisible par machine est pratiqué sur la jante, permettant de reconnaître la position de la zone d'usinage d'équilibrage, et que le repérage lisible par machine est lu avant l'étape de procédé d).

11. Dispositif destiné à usiner une jante fabriquée selon un procédé conformément à la revendication 1, avec :
un dispositif d'équilibrage destiné à déterminer un défaut d'équilibrage d'une jante avec une zone d'usinage d'équilibrage prédéfinie selon la position et la valeur,
un dispositif destiné à sélectionner et calculer un renfoncement de forme prédéfinie dans la zone d'usinage d'équilibrage de la jante, la position, le nombre et les dimensions de renfoncement étant choisis de telle sorte que le défaut d'équilibrage de la jante se situe, après la création d'au moins un renfoncement, dans une plage de tolérance prédéfinie aux alentours d'une valeur de consigne prédéfinie et la forme du renfoncement étant sélectionnée de telle sorte que le renfoncement lors d'un processus ultérieur destiné au montage d'un pneumatique classé en termes d'importance et de position de son défaut d'équilibrage sur la jante puisse recevoir une masselotte correspondant à la forme du renfoncement pour compenser le défaut d'équilibrage de la roue à l'état monté ; et
un dispositif destiné à pratiquer le renfoncement sélectionné et calculé.

12. Dispositif selon la revendication 11, **caractérisé par le fait que** la valeur de consigne prédéfinie est zéro.

13. Dispositif selon la revendication 11 ou 12, **caractérisé par le fait que** la plage de tolérance prédéfinie se situe aux alentours de la valeur de consigne = ± 10 g, préférentiellement = ± 5 g et plus préférentiellement = ± 2 g.

14. Dispositif selon l'une quelconque des revendications 11 à 13, **caractérisé par le fait que** le renfoncement est une rainure en queue d'aronde.

15. Dispositif selon l'une quelconque des revendications 11 à 13, **caractérisé par le fait que** le renfoncement est une rainure rectangulaire.

16. Dispositif selon l'une quelconque des revendications 11 à 13, **caractérisé par le fait que** le renfoncement est un alésage.

17. Dispositif selon l'une quelconque des revendications 11 à 13, **caractérisé par le fait que** le renfoncement comprend une multitude d'alésages.

18. Dispositif selon l'une quelconque des revendications 11 à 17, **caractérisé par** un dispositif conçu pour relever un repérage lisible par machine pratiqué sur la jante, permettant de reconnaître la position de la zone d'usinage d'équilibrage.

19. Procédé de montage d'une jante avec les étapes de procédé suivantes :
a) Mise à disposition d'une jante dont le défaut d'équilibrage se situe dans une plage de tolérance prédéfinie aux alentours d'une valeur de consigne prédéfinie, la jante présentant un renfoncement de forme prédéfinie et ayant été fabriquée selon un procédé conformément à la revendication 1 ;
b) Mise à disposition d'un pneumatique ayant un défaut d'équilibrage défini, présentant un repérage de pneumatique permettant de reconnaître la position et l'importance du défaut d'équilibrage de pneumatique ;
c) Sélection d'une masselotte correspondant à la forme prédéfinie du renfoncement destinée à compenser le défaut d'équilibrage de la combinaison roue/pneumatique ;
d) Installation de la masselotte sélectionnée dans le renfoncement et montage du pneumatique sur la jante dans une telle position par rapport à la jante qu'il résulte, après le montage du pneumatique sur la jante, un défaut d'équilibrage de la roue à l'état monté inférieur à une valeur limite prédéfinie.

20. Procédé selon la revendication 19, **caractérisé par le fait que** la masselotte est collée dans le renfoncement.

21. Procédé selon la revendication 19 ou 20, **caractérisé par le fait que** la masselotte est fixée dans le renfoncement à l'aide d'une pince.

22. Procédé selon la revendication 19, 20 ou 21, **caractérisé par le fait que** la masselotte est fixée dans le renfoncement à l'aide d'un raccord à vis.

23. Procédé selon la revendication 19, 20, 21, ou 22, le renfoncement étant pourvu d'un alésage taraudé, **caractérisé par le fait que** la masselotte est vissée dans l'alésage taraudé.
